(19) Europäisches Patentamt / European Patent Office / Office européen des brevets

(11) **EP 3 382 380 B1**

(12) **EUROPEAN PATENT SPECIFICATION**

(45) Date of publication and mention
of the grant of the patent:
**29.04.2020 Bulletin 2020/18**

(51) Int Cl.:
***G01N 27/12*** *(2006.01)*

(21) Application number: **17164306.7**

(22) Date of filing: **31.03.2017**

(54) **SENSOR AND SENSING METHOD FOR MEASURING A TARGET GAS CONCENTRATION IN AMBIENT AIR**

SENSOR UND MESSVERFAHREN ZUM MESSEN EINER GASKONZENTRATION IN DER UMGEBUNGSLUFT

CAPTEUR ET PROCÉDÉ DE DÉTECTION POUR MESURER UNE CONCENTRATION DE GAZ DANS L'AIR AMBIANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.10.2018 Bulletin 2018/40**

(73) Proprietor: **Sensirion AG**
**8712 Stäfa (CH)**

(72) Inventors:
• **BARTSCH, Sebastian**
**8712 Stäfa (CH)**
• **EGLI, Daniel**
**8712 Stäfa (CH)**
• **DUMOND, Patrice**
**8712 Stäfa (CH)**

(74) Representative: **Meyer, Michael Josef**
**E. Blum & Co. AG**
**Patent- und Markenanwälte VSP**
**Vorderberg 11**
**8044 Zürich (CH)**

(56) References cited:
EP-A1- 2 051 067     EP-A1- 2 808 675
DE-C1- 4 424 342     US-A1- 2004 026 268
US-A1- 2006 096 370     US-A1- 2017 023 520

## Description

Technical Field

The invention relates to a sensor for measuring a gas concentration of a target gas in a sample of ambient air, in particular a gas sensor based on metal oxide semiconductors.

Background Art

Gas sensors are based on the concept that gaseous analytes interact with a gas sensitive layer, in particular a metal oxide layer, at elevated temperatures of the gas sensitive layer in the range of more than 100° Celsius.

As a result of a catalytic reaction between the gaseous analyte and the gas sensitive layer, the conductivity of the gas sensitive layer may change which change can be measured. Hence, such gas sensors are also denoted as high temperature chemoresistors or chemical sensors for the reason that a chemical property of the analyte is converted into an electrical resistance change at high temperatures of the gas sensitive layer.

Gas sensors may be used for detecting one or more substances (target gases) in a surrounding gas, in particular in a sample of ambient air surrounding the gas sensor. Specific applications may include the detection of toxic gases, the detection of ethanol, sulphide compounds or other components in a user's breath, or the detection of other substances such as ozone.

For some applications there may be a particular need to not only detect a target gas, but also to determine a concentration or a threshold concentration of the target gas. This poses additional challenges.

US 2004/0026268 provides a gas sensor in which an electromotive force type gas sensor element is formed on a substrate. The electromotive force type gas sensor element has a heating element formed on the substrate, a layer of solid electrolyte formed with an insulating layer interposed on the heating element and two electrodes formed on the solid electrolyte and is characterized in that the substrate is a heat-resistant glass base substrate.

EP 2051067 A1 discloses a hydrogen-gas concentration sensor comprising a substrate and a plurality of hydrogen detecting films formed on the substrate, adjacent to one another. The hydrogen detecting films have a thin film layer, and a catalyst layer formed on the thin film layer. Each catalyst layer, when in contact with a hydrogen gas, exerts photocatalysis to hydrogenate each thin film layer reversibly and causes the electric resistance value thereof to change reversibly. The individual thin film layers have different sensitivities of a change in the hydrogen gas concentration vs. a change in the resistance value and different hydrogen gas concentration measurement ranges. The hydrogen-gas concentration sensor measures the hydrogen gas concentration with a thin film layer having a high sensitivity when the hydrogen gas concentration is low, and measures the hydrogen gas concentration with a thin film layer having a wide measurement range when the hydrogen gas concentration is high.

DE 4424342 C1 discloses a sensor array with metal oxide semiconductor gas sensors operated as resistor components, in which each sensor consists of a contact electrode (contact pad) applied to a substrate and a sensor-active layer deposited thereon, in which at least part of the sensors have a different contact spacing L of the contact pads in relation to the other sensors and/or a different dimensions of the area of the sensor-active layer and/or a different contact border area A between the contact and the sensor-active layer.

Accordingly, it is an object of an aspect of the present invention to provide a gas sensor with enhanced measurement capabilities, in particular a gas sensor that facilitates a measurement of concentrations of a target gas with improved accuracy.

Disclosure of the Invention

According to an embodiment of a first aspect of the invention there is provided a sensor for measuring a gas concentration of a target gas in a sample of ambient air. The sensor comprises a first gas sensitive component comprising a first gas sensitive layer being arranged between a first pair of measuring electrodes, a second gas sensitive component comprising a second gas sensitive layer being arranged between a second pair of measuring electrodes and one or more heating elements configured to heat the first gas sensitive layer and the second gas sensitive layer. The first gas sensitive layer and the second gas sensitive layer comprise a metal oxide semiconductor.

The first gas sensitive component is configured to measure the gas concentration of the target gas in a first concentration band and the second gas sensitive component is configured to measure the gas concentration of the target gas in a second concentration band.

The first concentration band is different from the second concentration band.

According to such an embodied sensor at least two separate gas sensitive components, namely the first gas sensitive component and the second gas sensitive component, are provided to measure the gas concentration. Each of the two separate gas sensitive components is specifically configured to measure the gas concentration in a specific concentration band. This allows to design and configure the first gas sensitive component and the second gas sensitive component in such a way that the measurement accuracy is optimized for the respective concentration band. In other words, the first gas sensitive component can be designed and/or configured such that the measurement is optimized for the measurement in the first concentration band and the second gas sensitive component can be designed and/or configured such that the measurement is optimized for the measurement in the second concentration band. The optimization may be in particular performed in view of enhanced measurement accuracy, sensitivity and/or reduced error rate of the detection.

One or more layer parameters of the first gas sensitive layer and the second gas sensitive layer are configured to operate the sensor for both the measuring of the first concentration band and for the measuring of the second concentration band in a respective transition regime. The transition regime is situated between a perturbation regime and a saturation regime. The transition regime is characterized by a higher sensitivity to the target gas than the perturbation regime and the saturation regime.

This embodiment is based on a discovery of the inventors of the present invention that gas sensitive layers exhibit a transition regime showing an increased sensitivity to a target gas and that such a transition regime can be configured by one or more layer parameters of the gas sensitive layers. More particularly, the transition regime is sandwiched between a perturbation regime and a saturation regime.

The perturbation regime may be defined as or considered as a regime in which the electrical resistance of the respective gas sensitive layer between the respective measuring electrodes is dominated by the ambient air. Accordingly, the concentration of the target gas in the sample of ambient air is relatively low and the target gas acts only as a perturbation within the dominating ambient air.

On the contrary, in the saturation regime the electrical resistance of the respective sensitive layer is dominated by the target gas.

In terms of penetration depth of the target gas into the layer of gas sensitive material, the perturbation regime may be defined or considered as a regime in which the target gas has not reached yet or does not substantially influence yet a well conducting area/layer between the measuring electrodes. Such a layer may also be denoted as electrode layer.

On the contrary, in the saturation regime the target gas has already penetrated the whole gas sensitive layer including the electrode layer.

The saturation regime may be also considered as or denoted as a pinch-off regime. This term may be based on one analogy that may be used to explain the mode of operation of the sensor in the pinch-off regime, namely that the well conducting electrode layer of the gas sensitive layer is pinched off in the pinch-off regime.

The one or more layer parameters can be used to control the formation of the transition regime for a respective concentration band of the target gas.

According to a further embodiment, the sensor is configured to measure the gas concentration in the first concentration band and in the second concentration band in a continuous manner.

According to such an embodiment the sensor is configured to provide a continuous or in other words analogue output signal. As the measurement is optimized for the respective concentration band, the continuous/analogue output signals of the respective concentration band can be measured with improved accuracy/sensitivity.

According to a further embodiment, the first gas sensitive component is configured to detect in the first concentration band a first threshold concentration and the second gas sensitive component is configured to detect in the second concentration band a second threshold concentration.

According to such an embodiment, the sensor is configured to provide discrete or in other words digital output signals.

The first gas sensitive component can be designed and/or configured such that the measurement is optimized for the detection of the first threshold concentration and the second gas sensitive component can be designed and/or configured such that the measurement is optimized for the detection of the second threshold concentration. The optimization may be in particular performed in view of enhanced measurement accuracy, sensitivity and/or reduced error rate of the detection.

According to a further embodiment, the first and the second gas sensitive layer comprise a n-doped metal oxide semiconductor material. Furthermore, the sensor is configured to measure a concentration of an oxidizing target gas.

According to such an embodiment, the n-doped metal oxide semiconductor material provides a relatively well conducting path between the measurement electrodes, while the oxidizing target gas penetrating the first gas sensitive layer and the second gas sensitive layer results in a resistance increase of the first gas sensitive layer and the second gas sensitive layer.

According to an embodiment, the oxidizing target gas is ozone or nitrogen dioxide.

This embodiment is based on a discovery of the inventors that a sensor according to embodiments of the invention is particularly suited for the detection of ozone. More particularly, the inventors have discovered that gas sensitive layers comprising n-doped metal oxide semiconductor materials show a particularly pronounced sensitivity to ozone in the transition regime.

According to a further embodiment, the first and the second gas sensitive layer comprise a p-doped metal oxide semiconductor material. Furthermore, the sensor is configured to measure a concentration of a reducing target gas.

According to such an embodiment, the p-doped metal oxide semiconductor material provides a relatively well conducting path between the measurement electrodes, while the reducing target gas penetrating the first gas sensitive layer and the second gas sensitive layer results in a resistance increase of the first gas sensitive layer and the second gas sensitive layer.

Both embodiments (n-doped and p-doped MOX material) have in common that the target gas increases the resistance of the gas sensitive layer. This facilitates the formation of the transition regime.

According to a further embodiment, the first gas sensitive component and the second gas sensitive component differ in at least one layer parameter. The layer parameter may be in particular a thickness of the first gas sensitive layer and the second gas sensitive layer, the morphology of the first gas sensitive layer and the second gas sensitive layer, in particular the porosity of the first gas sensitive layer and the second gas sensitive layer, the material of the first gas sensitive layer and the second gas sensitive layer and a respective operating temperature of the first gas sensitive layer and the second gas sensitive layer.

According to such an embodiment the respective layer parameter for the respective concentration band is chosen such that the measurement is optimized in the respective concentration band.

According to embodiments, the first and the second gas sensitive layer may comprise the same base material, but different additives added to the same base material. The additives may be catalytic additives or non-catalytic additives such as SiO2. The additives may also encompass dopant materials and in particular dopant materials of different concentration.

According to a preferred embodiment only one layer parameter is changed in a systematic way for a plurality of gas sensitive layers such that the respective sensitivity and/or accuracy is achieved for the respective concentration band.

According to a further embodiment of the invention, the first gas sensitive layer has a first thickness and the second gas sensitive layer has a second thickness. The second thickness is different from the first thickness. Furthermore, the first thickness and the second thickness are chosen such that the sensor operates for both the detection of the first threshold concentration and for the detection of the second threshold concentration in the transition regime.

According to such an embodiment, the thickness of the first and the second gas sensitive layer is used as layer parameter to design the first gas sensitive layer and the second gas sensitive layer in such a way that the sensor operates for the detection of the respective threshold concentration in the transition regime with increased sensitivity.

The thickness of the first and the second gas sensitive layer can be adapted during fabrication of the sensor with suitable fabrication techniques as known to a skilled person in the art.

It should be noted that according to embodiments the thickness is in particular understood as the distance between the surface of the gas sensitive layers that is in contact with the sample of ambient air and the electrode layer comprising the measuring electrodes. The electrode layer is understood as the layer of the first and the second gas sensitive layer that is situated directly between the measuring electrodes.

In other words, the thickness of the first and the second gas sensitive layer may be in particular defined as the distance or diffusion distance that the target gas has to pass to reach the electrode layer.

According to embodiments the measuring electrodes are arranged at a bottom area of the gas sensitive layers, opposite to a top area/top surface that is exposed to the sample of ambient air.

According to embodiments, the second thickness is larger than the first thickness and the second threshold concentration is higher than the first threshold concentration.

This embodiment is based on the insight that the transition regime having the higher sensitivity to the target gas occurs with an increasing thickness of the gas sensitive layer at an increasing concentration of the target gas, assuming a given reactivity. The reactivity may be controlled according to embodiments by the MOX material and the respective operating temperature of the first and the second gas sensitive layer.

Apart from the thickness as layer parameter as described above, a plurality of further layer parameters may be used to configure or control the respective gas sensitive component such that it operates in the transition regime.

According to an embodiment, the morphology of the first gas sensitive layer and the second gas sensitive layer, in particular the porosity of the first gas sensitive layer and the second gas sensitive layer may be used as layer parameter.

According to such an embodiment, the morphology of the gas sensitive layers is used to control the penetration depth of the target gas into the gas sensitive layer in dependence on the respective threshold concentration. As an example, the higher the porosity, the higher the penetration depth of the target gas for a given concentration.

Hence, according to some embodiments, the first gas sensitive layer and the second gas sensitive layer may have the same thickness, but a different porosity. More particularly, the first gas sensitive layer may have a first porosity and the second gas sensitive layer may have a second porosity that is lower than the first porosity. Furthermore, the second threshold concentration is higher than the first threshold concentration.

This embodiment is based on the insight that the transition regime having the highest sensitivity to the target gas occurs with an increasing porosity of the gas sensitive layer at a decreasing concentration of the target gas, assuming a given reactivity and layer thickness. In this respect, the layer thickness and the porosity of the gas sensitive layer have an opposite influence on the occurrence/position of the transition regime.

According to further embodiments, the material of the first gas sensitive layer and the second gas sensitive layer may be used as layer parameter to tune the transition regime. In this respect, the base material (MOX material) as well as dopant materials can be used to tune the transition regime. The dopant materials may be e.g. noble metals such as platinum, gold, palladium, rhodium or iridium. The dopant materials can be in particular used to tune the reactivity of the gas sensitive layers.

According to further embodiments, a respective operating temperature of the first gas sensitive layer and the second gas sensitive layer may also be used to tune the position of the transition regime.

According to a further embodiment, the sensor is configured to measure the concentration of the target gas in a plurality of concentration bands.

According to such an embodiment the upper and lower limits of the respective concentration bands may be defined by threshold concentrations of the target gas. For each such threshold concentration a gas sensitive component is provided to detect the respective threshold concentration. The more gas sensitive components are provided, the narrower the corresponding concentration bands and the higher the resolution of the sensor.

According to a further embodiment, the sensor is configured to extract the concentration of the target gas in a hierarchical way from a plurality of gas sensitive components.

In other words, the sensor comprises a plurality of gas sensitive components, each defining a separate threshold concentration, and the respective threshold concentrations are arranged in an increasing order.

According to a further embodiment, the sensor comprise a first operation mode configured to operate the first sensor component and the second sensor component simultaneously.

If the sensor components are operated simultaneously, they can be used to measure a concentration band having a lower threshold detected by the first gas sensitive component and an upper threshold detected by the second gas sensitive component. Furthermore, the first and the second gas sensitive component may be used in a redundant way to avoid measurement errors. As an example, if the second gas sensitive component has detected that the upper threshold has been exceeded, the sensor signal of the first gas sensitive component configured to detect the lower threshold may be used to confirm the finding of the second gas sensitive component. In other words, both the first and the second gas sensitive component need to deliver a positive output signal, otherwise a detection error is indicated.

According to a further embodiment, the sensor comprises a second operation mode configured to operate only the first gas sensitive component or only the second gas sensitive component.

This embodiment is in particular useful for the measuring of concentration bands that have only an upper limit or only a lower limit. As an example, if the sensor shall, e.g. in the beginning of its operation, only detect if a lower threshold has been exceeded, then only the first gas sensitive component need to be operated, while the second gas sensitive component with the higher threshold concentration can be switched off. Furthermore, if during operation the upper threshold of the second gas sensitive component has been exceeded, then the first gas sensitive component may be switched off. Such an embodiment may be used to save power. This is in particular useful for embodiments according to which each gas sensitive component has its own heater.

According to embodiments the sensor may have both the first and the second operation mode and the sensor may switch during operation between these operation modes.

According to a further embodiment, the thickness of the first and the second gas sensitive layer is between 100 nm and 5000 nm.

Such a thickness was found to be beneficial for the occurrence of a transition regime with enhanced sensitivity. If the thickness is larger, the target gas might not penetrate the gas sensitive layer deep enough to establish the transition regime. If the thickness is lower, the layer may often be penetrated completely even with low concentrations by the target gas, thereby operating also with low concentrations immediately in the saturation regime.

According to a further embodiment, the sensor is configured to operate the first and the second gas sensitive component at predefined reactivities.

The predefined reactivities may be in particular determined by the material of the gas sensitive layer and the operating temperature.

According to a further embodiment, the sensor is configured to provide a fine-tuning of the transition regime via one or more reactivity control parameters. The reactivity control parameters may be in particular the operating temperature of the first and the second gas sensitive layer. According to embodiments, the reactivity control parameters may be used to select a plateau region of a respective resistivity-reactivity curve for the first gas sensitive layer and the second gas sensitive layer.

Such an embodiment may be used to fine-tune the sensor response and to minimize the dependence of the sensor signal on changes of the reactivity of the first gas sensitive layer and the second gas sensitive layer, in particular for a given fixed layer thickness. More particularly, the reactivity of the first and the second gas sensitive layer may change over time, e.g. by aging and/or poisoning. By selecting the plateau region, such aging effects may be compensated, prevented or postponed, thereby increasing the stability of the sensor signal over time. Another possible reactivity control parameter is the composition of the material of the first and the second gas sensitive layer

According to an embodiment of another aspect of the invention a method for measuring a gas concentration of a target gas in a sample of ambient air is provided. The method comprises steps of providing a first gas sensitive component comprising a first gas sensitive layer being arranged between a first pair of measuring electrodes and providing a second gas sensitive component comprising a second gas sensitive layer being arranged between a second pair of measuring electrodes. The first gas sensitive layer and the second gas sensitive layer comprise a metal oxide semiconductor.

The method further comprises steps of measuring, by the first gas sensitive component, the gas concentration of the target gas in a first concentration band and measuring, by the second gas sensitive component, the gas concentration of the target gas in a second concentration band. The first concentration band is different from the second concentration band. The method further comprises operating both the first gas sensitive layer for the measuring of the first concentration band and the second gas sensitive layer for the measuring of the second concentration band in a respective transition regime, the transition regime being situated between a perturbation regime and a saturation regime, wherein the transition regime is characterized by a higher sensitivity to the target gas than the perturbation regime and the saturation regime.

According to an embodiment of another aspect of the invention a computer program product for operating a sensor according to the first aspect is provided. The computer program product comprises a computer readable storage medium having program instructions embodied therewith. The program instructions are executable by the sensor to cause the sensor to perform a method comprising steps of measuring, by the first gas sensitive component, the gas concentration of the target gas in a first concentration band and measuring, by the second gas sensitive component, the gas concentration of the target gas in a second concentration band.

According to an embodiment of another aspect of the invention an electronic device is provided that comprises a sensor according to embodiments of the first aspect. The electronic device may be in particular a stationary electronic device, e.g. a device that is embodied or installed in a car or as a home appliance. According to other embodiments the electronic device may be a portable device, e.g. a smartphone.

Other advantageous embodiments are listed in the dependent claims as well as in the description below.

It should be noted that features and/or advantages of one aspect of the invention may be applied to the other aspects of the invention as appropriate.

Brief Description of the Drawings

The invention will be better understood and objects other than those set forth above will become apparent from the following detailed description thereof. Such description refers to the annexed drawings, wherein:

  FIG. 1a shows a 3-dimensional view of a sensor comprising a first gas sensitive component and a second gas sensitive component with different layer thicknesses according to an embodiment of the invention;

  Fig. 1b shows a cross section/side view of the first gas sensitive component of Fig. 1a;
  Fig. 1c shows a cross section/side view of the second gas sensitive component of Fig. 1a;
  FIG. 2a shows a cross sectional view of a gas sensitive component operating in a perturbation regime;
  FIG. 2b shows a cross sectional view of a gas sensitive component operating in a transition regime;
  FIG. 2c shows a cross sectional view of a gas sensitive component operating in a saturation regime;
  FIG. 3 shows a sensor having four gas sensitive components having different layer thicknesses;
  FIG. 4 shows a sensor having four gas sensitive components having the same layer thickness, but a different porosity;
  FIG. 5 shows a sensor having four gas sensitive components having the same layer thickness, but a different reactivity;
  FIG. 6 shows a schematic illustration of the operation of a sensor according to an embodiment of the invention;
  Fig. 7a illustrates a resistance-concentration curve for a first gas sensitive layer;
  Fig. 7b illustrates a resistance-concentration curve for a second gas sensitive layer having a greater thickness than the first gas sensitive layer;
  FIG. 8 shows a diagram of an exemplary simulation illustrating resistivity-reactivity curves for three different layer thicknesses;
  Fig. 9 shows the diagram of FIG. 8 with an additional illustration of a fine-tuning of a transition regime via one or more reactivity control parameters;
  FIG. 10 shows a sensor having four gas sensitive components being operated at different temperatures; and
  Fig. 11 illustrates a basic mode of operation of a sensor configured to measure the gas concentration in a continuous manner.

The drawings are provided to aid the understanding of embodiments of the invention and are not to scale.

Modes for Carrying Out the Invention

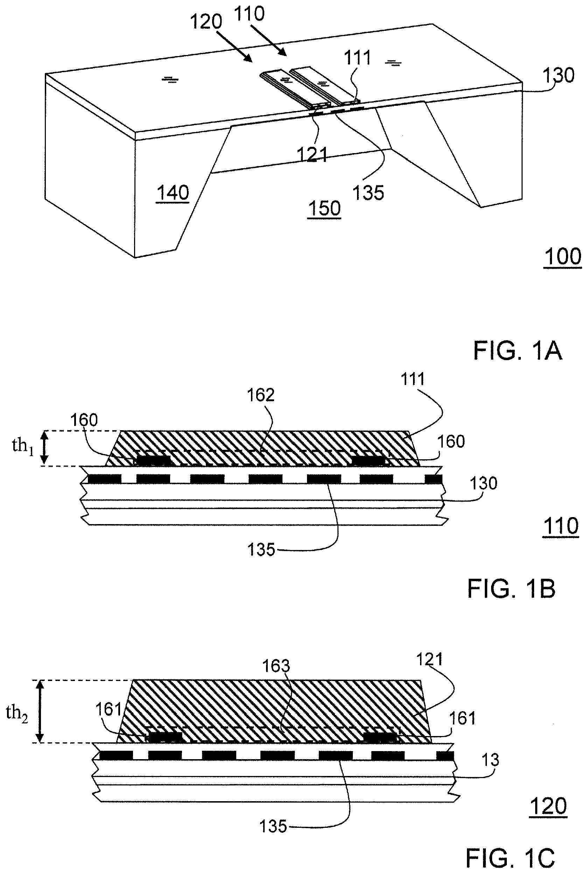

FIG. 1a shows a 3-dimensional view of a sensor 100 according to an embodiment of the invention. The sensor 100 is configured to measure a gas concentration of a target gas in a sample of ambient air that surrounds the gas sensor 100.

The sensor 100 comprises a first gas sensitive component 110 and a second gas sensitive component 120.

The first gas sensitive component comprises a first gas sensitive layer 111 and the second gas sensitive component 120 comprises a second gas sensitive layer 121. The gas sensitive layers 111, 121 comprise a gas sensitive sensing material. The sensing material is a material that changes at least one electrical property (in particular the real or imaginary part of its electrical impedance) as a function of the composition of the gas that surrounds it. The change of the property can be measured in order to obtain information on said composition. The sensing material of the gas sensitive layers 111, 121 can e.g. contain at least one metal oxide material. Such metal oxide material may include one or more of tin oxide, zinc oxide, titanium oxide, tungsten oxide, indium oxide and gallium oxide. Such metal oxides may be used for the detection of various analytes as target gas such as ozone, VOCs, carbon monoxide, nitrogen dioxide, methane, ammonia, hydrogen, or hydrogen sulphide.

Metal oxide sensors are based on the concept that gaseous analytes interact with the metal oxide layer at elevated temperatures of the sensitive layer in the range of more than 100 °C, and specifically between 250 °C and 450 °C. As a result of the catalytic reaction, the conductivity of the gas sensitive layers may change, which change can be measured. Hence, such sensors are also denoted as high temperature chemoresistors for the reason that a chemical property of the analyte is converted into an electrical resistance at high temperatures of the gas sensitive layers.

Fig. 1b shows a cross section/side view of the first gas sensitive component 110 and FIG. 1c a cross section/side view of the second gas sensitive component 120. The sensor 100 is integrated with CMOS circuitry (not shown) on a single chip.

The sensor 100, also referred to as chemical sensor or gas sensor, comprises CMOS layers 130 and a handle layer 140. Parts of the CMOS layers 130 and of the handle layer 140 are etched away to form a cavity 150 at the location of the first gas sensitive layer 111 and the second gas sensitive layer 121. The remaining CMOS layers 130 form a thin membrane to support the first gas sensitive component 110 and the second gas sensitive component 120.

Embedded within the CMOS layers 130 are heating elements 135 forming a heater to provide a local source of heat to heat the first gas sensitive component 110 and the second gas sensitive component 120 during operation of the sensor 100. The temperature can rise rapidly around the first gas sensitive component 110 and the second gas sensitive component 120, while the thicker part of the chip reacts due to its thermal inertia with a slower rise of temperature. By controlling the heating elements 135 accordingly, the material, in particular the metal oxide, of the first gas sensitive layer 111 and the second gas sensitive layer 121 can be activated for a measurement and subsequent regeneration.

The first gas sensitive layer 111 is contacted by a first pair of measuring electrodes 160 and the second gas sensitive layer 121 is contacted by a second pair of measuring electrodes 161 and hence both act as a resistor. In the presence of a target gas as analyte, the respective resistance of the first gas sensitive layer 111 and the second gas sensitive layer 121 changes and thereby provides a measure of the concentration of the target gas in the sample of ambient air in the immediate vicinity of the first gas sensitive layer 111 and the second gas sensitive layer 121.

The electrodes 160 form an electrode layer 162 and the electrodes 161 form an electrode layer 163. The electrode layers 162, 163 may be defined as the layers of the first and the second gas sensitive layer respectively that are situated directly between the measuring electrodes and that provide in a perturbation regime a well conducting path between the measuring electrodes that dominates the resistance of the gas sensitive layers during this perturbation regime. The electrode layers 162, 163 are indicated by dotted lines. It should be noted that the indicated dimensions of the electrode layers 162, 163 are just an exemplary embodiment and may vary in dependence of various factors, such as the material composition, geometry etc. In this respect the electrode layers 162, 163 are in particular defined by the functionality that they provide (well conducting path in the perturbation regime) rather than by their dimensions.

The first gas sensitive component 110 is generally configured to measure the gas concentration of the target gas in a first concentration band and more particularly to detect a first threshold concentration of the target gas. The second gas sensitive component 120 is generally configured to measure the gas concentration of the target gas in a second concentration band and more particularly to detect a second threshold concentration of the target gas. In order to enhance the sensitivity for the detection of the first threshold concentration and the second threshold concentration, the first gas sensitive layer 111 and the second gas sensitive layer 121 have a different thickness.

More particularly, the first gas sensitive layer 111 has a first thickness $th_1$ and the second gas sensitive layer has a second thickness $th_2$. The second thickness th2 is larger than the first thickness $th_1$. The different thicknesses $th_1$, $th_2$ are optimized for the respective threshold concentration of the respective gas sensitive component.

As according to this illustrated embodiment the electrodes 160, 161 are placed at the bottom of the gas sensitive layers 111, 121, the thicknesses $th_1$, $th_2$ correspond approximately to the diffusion distance between the surface of the gas sensitive layers 111, 121 that is in contact with the sample of ambient air and the electrode layers 162, 163 comprising the measuring electrodes 160, 161. In other words, the thickness of the first and the second gas sensitive layer determines the diffusion distance that the target gas has to pass to reach the electrode layers 162, 163.

Both the measuring electrodes 160, 161 and the heating elements 135 are connected to a control unit/control circuitry (not explicitly shown), which can be part of the CMOS circuitry arranged on the same handle layer 140. The function of the control unit/control circuitry is to control the amount of electrical power flowing into the heating elements 135 and to perform and register measurements to determine the changes in the resistance of the gas sensitive layers 111, 121.

When initialising a measurement, the control unit raises the temperature of the first gas sensitive layer 111 and the second gas sensitive layer 121 to an activation temperature for a predetermined period of time, herein referred to as the activation period. After the activation period, the control unit lets the temperature of the first gas sensitive layer 111 and the second gas sensitive layer 121 drop to a measurement or operation temperature and maintains the sensitive layers 120, 121 at the measurement temperature for a duration herein referred to as measurement period. During the measurement period, the resistance of the gas sensitive layers 111, 121 is measured and converted into a value representative of the concentration of the target gas. A typical operating temperature is in a range between 250 to 600 degrees Celsius.

According to some embodiments the first gas sensitive layer 111 and the second gas sensitive layer 121 may comprise in particular a n-doped metal oxide semiconductor (MOX) material. According to such an embodiment the sensor 100 may be provided to measure a concentration of an oxidizing target gas, in particular ozone. Another oxidizing gas may be $NO_2$.

According to other embodiments the first and the second gas sensitive layer 111, 121 may comprise a p-doped metal oxide semiconductor material and the sensor 100 is provided to measure a concentration of a reducing target gas, e.g. carbon monoxide, VOCs, formaldehyde, methane, ammonia, hydrogen or hydrogen sulphide.

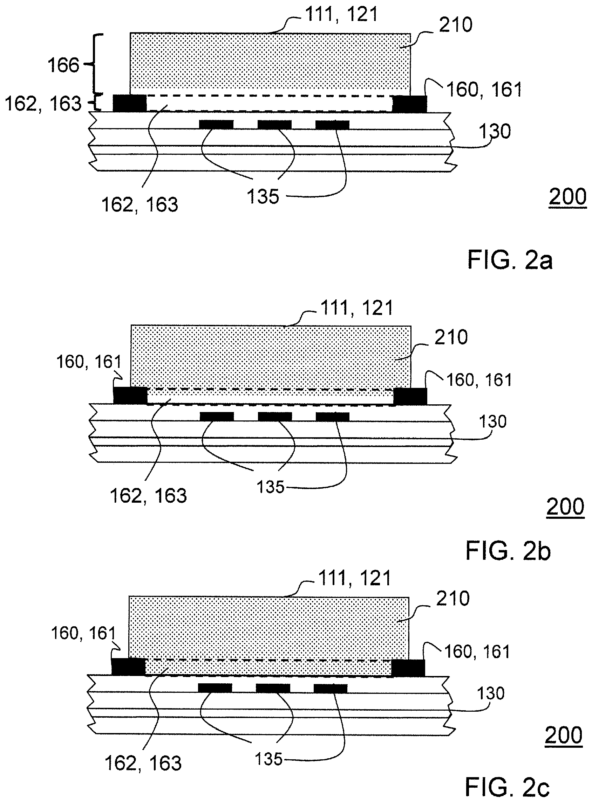

As mentioned above, the different thicknesses $th_1$, $th_2$ are optimized to detect the respective threshold concentration with enhanced sensitivity. More particularly, the different thicknesses $th_1$, $th_2$ are configured such that the sensor 100 operates for both the detection of the first threshold concentration and for the detection of the second threshold concentration in a transition regime. The transition regime is situated between a perturbation regime and a saturation regime. This is in the following further illustrated in a schematic and simplified way with reference to FIGS. 2a, 2b and 2c.

FIG. 2a shows a cross sectional view of a gas sensitive component 200 operating in a perturbation regime. The gas sensitive component 200 may represent both the first gas sensitive component 110 of Fig. 1b as well as the gas sensitive component 120 of Fig. 1c.

The perturbation regime may be defined as or considered as a regime in which the electrical resistance measured between the measuring electrodes 160, 161 is still dominated by the ambient air. More particularly, a target gas 210 to be measured, which is illustrated by a dotted pattern, has not reached yet or does not substantially influence yet the electrode layers 162, 163 between the measuring electrodes 160, 161. Accordingly, the electrode layers 162, 163 are still well conducting and provide a well conducting path between the measuring electrodes 160, 161.

As the resistance measured between the measuring electrodes 160, 161 may be considered as a parallel connection/parallel circuit of the electrode layers 162, 163 and a top layer 166 situated above the electrode layers 162 and 163, the total resistance of the layers 111, 121 is still mainly dominated by the electrode layers 162, 163.

FIG. 2b shows a cross sectional view of a gas sensitive component operating in a transition regime. In the transition regime the target gas 210 has reached the electrode layers 162, 163 and does partly penetrate or at least substantially influence the resistance of the electrode layers 162, 163. However, the target gas 210 has not completely penetrated the electrode layers 162, 163.

In the transition regime the sensor 200 shows an increased sensitivity to the target gas 210.

FIG. 2c shows a cross sectional view of a gas sensitive component operating in the saturation regime. In the saturation regime, the target gas 210 has already penetrated the whole gas sensitive layer 111, 121 including the electrode layers 162, 163. Hence in the saturation regime the electrical resistance of the gas sensitive layers 111, 121 is dominated by the target gas.

It should be noted that FIGS. 2a to 2c are provided to illustrate the regimes according to embodiments of the invention in a simplified manner and to ease the understanding of the invention. However, the underlying physical principles of the different regimes may be more complex. Furthermore, the borders between the different regimes may not be exactly defined, but may vary and may be considered to have sliding or floating transitions.

In order to operate the sensor for the respective threshold concentration in the transition regime, one or more layer parameters of the gas sensitive layers may be used.

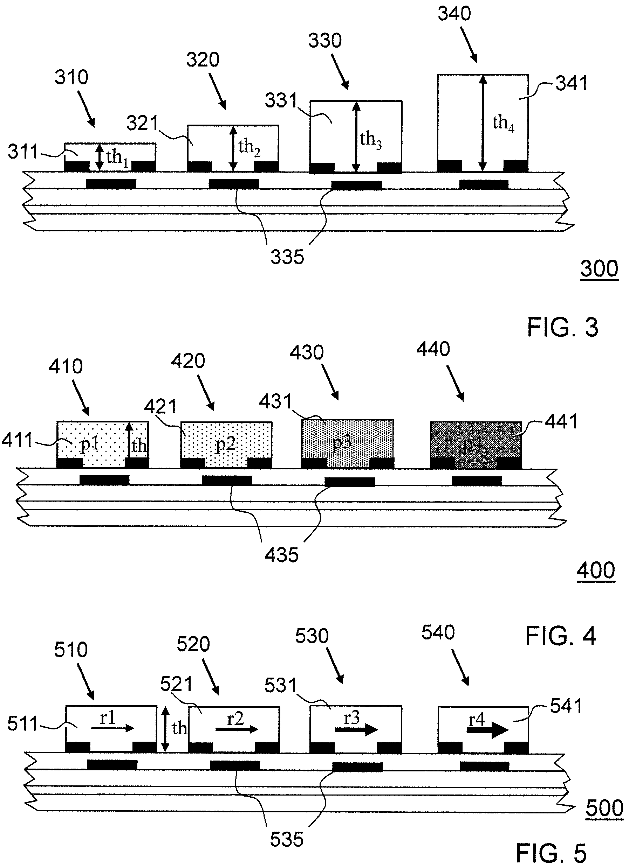

This is illustrated with reference to FIGS. 3 to 5 and 10.

FIG. 3 shows a sensor 300 having four gas sensitive components 310, 320, 330 and 340. The gas sensitive components 310, 320, 330 and 340 comprise gas sensitive layers 311, 321, 331, 341 having different layer thicknesses th1, th2, th3 and th4 respectively. Each of the gas sensitive layers 310, 320, 330 and 340 may be heated by a heating element 335. Each of the gas sensitive layers 310, 320, 330 and 340 is configured to operate in a transition regime to detect a different threshold concentration c1, c2, c3 and c4 respectively, wherein c4 >c3 >c2 >c1.

FIG. 4 shows a sensor 400 having four gas sensitive components 410, 420, 430 and 440. The gas sensitive components 410, 420, 430 and 440 comprise gas sensitive layers 411, 421, 431, 441 having the same layer thickness th. Each of the gas sensitive layers 410, 420, 430 and 440 may be heated by a heating element 435. Each of the gas sensitive layers 410, 420, 430 and 440 comprise a layer material of a different porosity p1, p2, p3 and p4 respectively. The porosity, which may also be denoted as void fraction, is a measure of the void spaces in the layer material. More particularly, it indicates the fraction of the volume of voids over the total volume. It may be indicated by a number between 0 and 1, or as a percentage between 0 and 100%. In this example it is assumed that $p1 > p2 > p3 > p4$. Each of the gas sensitive layers 410, 420, 430 and 440 is configured to operate in a transition regime to detect a different threshold concentration $c1$, $c2$, $c3$ and $c4$ respectively, wherein again $c4 > c3 > c2 > c1$.

FIG. 5 shows a sensor 500 having four gas sensitive components 510, 520, 530 and 540. The gas sensitive components 510, 520, 530 and 540 comprise gas sensitive layers 511, 521, 531, 541 having the same layer thickness th. Each of the gas sensitive layers 510, 520, 530 and 540 may be heated by a heating element 535. Each of the gas sensitive layers 410, 420, 430 and 440 comprise a layer material of a different reactivity $r1$, $r2$, $r3$ and $r4$ respectively with respect to the target gas. The reactivity may be defined as the tendency of the material of the gas sensitive layers 510, 520, 530 and 540 to undergo a chemical reaction with the target gas. In other words, it may be defined as the relative capacity of the material of the gas sensitive layers 510, 520, 530 and 540 to undergo a chemical reaction with the target gas. The reactivity does not only depend on the material and composition of the gas sensitive layers, but also on the operating temperature of the gas sensitive layers. In this example $r4 > r3 > r2 > r1$ which is also indicated by an arrow with increasing thickness. Each of the gas sensitive layers 510, 520, 530 and 540 is configured to operate in a transition regime to detect a different threshold concentration $c1$, $c2$, $c3$ and $c4$ respectively, wherein again $c4 > c3 > c2 > c1$.

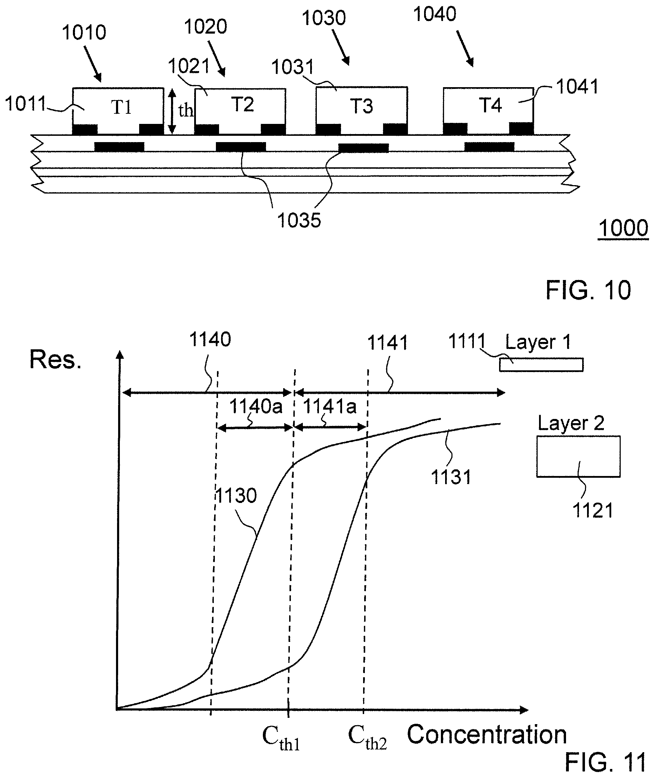

FIG. 10 shows a sensor 1000 having four gas sensitive components 1010, 1020, 1030 and 1040. The gas sensitive components 1010, 1020, 1030 and 1040 comprise gas sensitive layers 1011, 1021, 1031, 1041 having the same layer thickness th. Each of the gas sensitive layers 1011, 1021, 1031 and 1041 can be individually heated by heating elements 1035. The heating elements 1035 are configured to heat the gas sensitive components 1010, 1020, 1030 and 1040 to different heating temperatures $T1$, $T2$, $T3$ and $T4$ respectively. As an example, $T4 > T3 > T2 > T1$. Each of the gas sensitive components 1010, 1020, 1030 and 1040 may be then configured to operate in a transition regime to detect a different threshold concentration $c1$, $c2$, $c3$ and $c4$ respectively, wherein $c4 > c3 > c2 > c1$.

It should be noted that according to further embodiments the layer parameters illustrated with reference to FIGS. 3 to 5 and 10 may also be combined individually to operate the sensor in the transition regime for a desired threshold concentration.

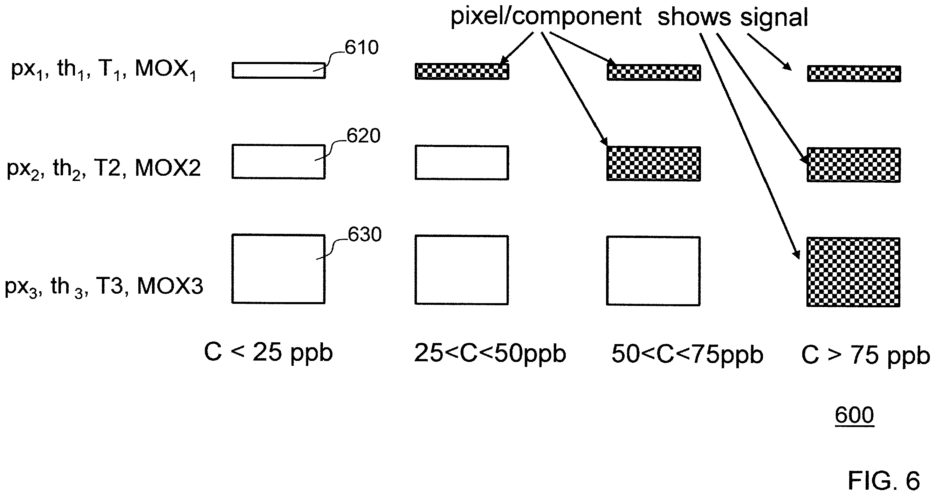

FIG. 6 shows a schematic illustration of the operation of a sensor 600 according to an embodiment of the invention. The sensor 600 comprises three gas sensitive components 610, 620 and 630. The three gas sensitive components 610, 620 and 630 are in the following also denoted as gas sensitive pixels $px_1$, $px_2$ and $px_3$. The gas sensitive pixels $px_1$, $px_2$ and $px_3$ may be generally characterized by layer thicknesses $th_1$, $th_2$ and $th_3$, by operating temperatures $T_1$, $T_2$ and $T_3$ and by layer materials $MOX_1$, $MOX_2$ and $MOX_3$.

The sensor 600 is configured to measure the concentration of the target gas in a plurality of concentration bands. A first concentration band is configured for a concentration of less than 25ppb of the target gas, e.g. of ozone. A second concentration band is configured for a concentration of the target gas between 25 and 50 ppb. A third concentration band is configured for a concentration of the target gas between 50 and 75 ppb. A fourth concentration band is configured for a concentration of the target gas above 75ppb.

The sensor 600 is configured to extract the concentration of the target gas in a hierarchical way from the gas sensitive components 610, 620 and 630. More particularly, for the first concentration band all pixels $px_1$, $px_2$ and $px_3$ operate below their respective threshold concentrations and hence do not show any sensor signal. For the second concentration band only pixel $px_1$ operates above its threshold concentrations and hence shows a sensor signal which is indicated by a chess grid. For the third concentration band pixels $px_1$ and $px_2$ operate above their threshold concentrations and hence show a sensor signal indicated by corresponding chess grids. And finally for the fourth concentration band all pixels $px_1$, $px_2$ and $px_3$ operate above their threshold concentrations and hence show a sensor signal. The switching between the concentration bands is triggered only by one of the respective pixels, namely by the pixel that is configured for the corresponding threshold concentration. As an example, the switching from the second concentration band to the third concentration band is triggered by the pixel $px_2$, while the switching to the third concentration band is triggered by the pixel $px_3$. The other pixels may be used as redundant pixels for the respective concentration band, but they may also be switched off. Hence according to some embodiments the sensor 600 may be configured to operate all the sensor components 610, 620 and 630 simultaneously and according to other embodiments the sensor 600 is configured to operate the sensor components 610, 620 and 630 in an alternating way or in other words only a subset of the sensor components. According to the latter embodiment, only the sensor components that define the threshold for a current concentration band may be operated, while the other sensor components may be switched off. As an example, in the beginning of the sensor operation only the first sensor component 610 may be operated/switched on. Only if the first sensor component 610 has detected that the first threshold concentration of 25 ppb has been reached, the second sensor component 620 is also switched on to monitor whether the second threshold of 50 ppb has been reached. If the second threshold of 50 ppb has been reached, the third gas sensitive component 630 is switched on to monitor the next threshold of 75 ppb. Then the first gas sensitive component 610 may be switched off to save power. This may include to switch off the heater for the first gas sensitive component 610, thereby saving additional power.

According to embodiments the thicknesses $th_i$ of the gas sensitive layers may be preferably in a range between 100 nm and 5 $\mu$m.

More generally, according to embodiments a number n of gas sensitive components may define n different threshold concentrations of the target gas. These n threshold concentrations may split the concentration range [0, infty) into n+ 1 concentration bands that can be identified by the n gas sensitive components. The larger the number n of gas sensitive components, the larger the resolution.

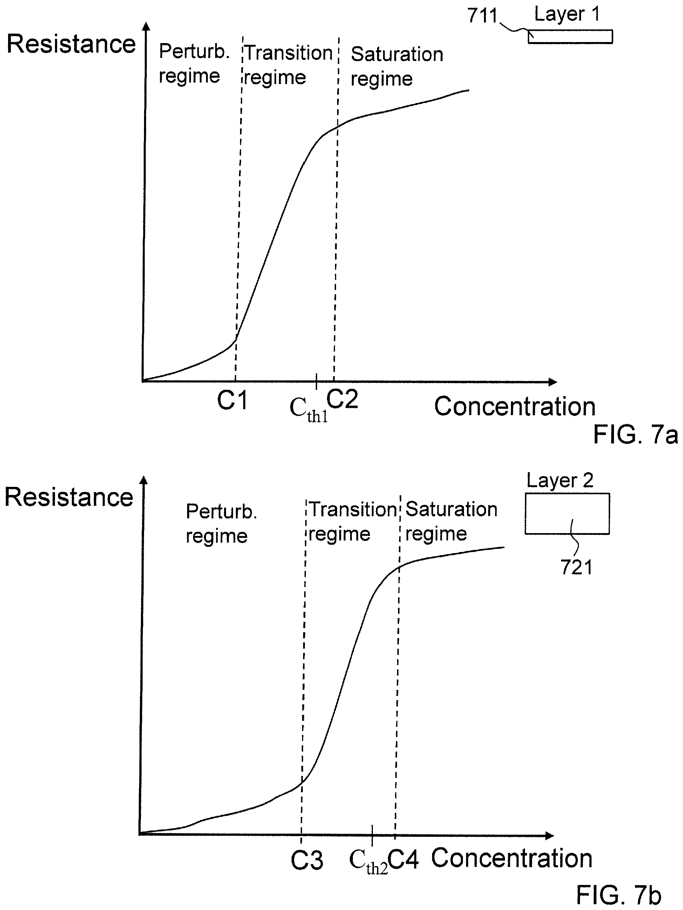

Fig. 7a and Fig. 7b illustrate in a schematic and simplified way a basic mode of operation of a sensor according to an embodiment of the invention.

The sensor comprises a first gas sensitive layer 711 and a second gas sensitive layer 721. The second gas sensitive layer 721 is thicker than the first gas sensitive layer 711.

Fig. 7a illustrates a resistance-concentration curve for the first gas sensitive layer 711 and Fig. 7b a resistance-concentration curve for the second gas sensitive layer 721. The x-axis denotes the concentration of the target gas in a sample of ambient air and the y-axis the resistance of the gas sensitive layers 711, 721 in relation to the resistance with no target gas in the sample of ambient air.

Referring to Fig. 7a, starting from zero, the resistance is increasing with a rising concentration of the target gas rather slowly during the perturbation regime. Then, approximately at a concentration C1, the gas sensitive layer 711 enters the transition regime having a steeper increase/slope of the resistance. Finally, approximately at a concentration C2, the gas sensitive layer 711 enters the saturation regime having again a lower increase/slope of the resistance.

Referring to Fig. 7b, starting from zero, the resistance is increasing again with a rising concentration of the target gas rather slowly during the perturbation regime. Then, approximately at a concentration C3, the gas sensitive layer 721 enters the transition regime having a steeper increase/slope of the resistance. The concentration C3 is greater than the concentration C1. In other words, the second gas sensitive layer 721 enters the saturation regime only at a higher concentration than the first gas sensitive layer 711. This is caused by the larger thickness of the second gas sensitive layer 721. Finally, approximately at a concentration C4, the gas sensitive layer 721 enters the saturation regime having again a lower increase/slope of the resistance.

As the sensitivity of the sensor is higher in the transition regime than in the perturbation regime and the saturation regime, both the first gas sensitive layer 711 and the second gas sensitive layer 721 are configured to operate in the transition regime. Accordingly, the second gas sensitive layer 721 is preferably configured to detect a second threshold concentration $C_{th2}$ that is higher than a first threshold concentration $C_{th1}$ that the first gas sensitive layer is supposed to detect. Thereby the accuracy of the sensor may be increased and the error rate may be decreased.

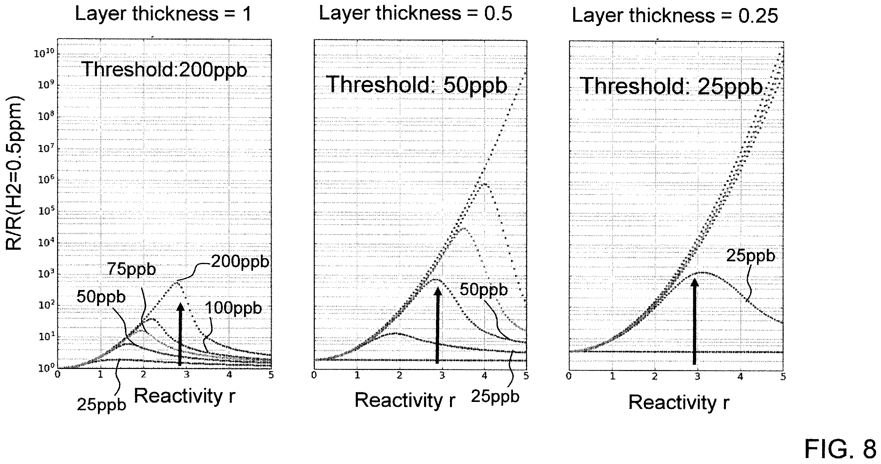

Fig. 8 illustrates some background of principles according to embodiments of the invention with the help of a simulation based on a simplified phenomenological model of the resistance of a gas sensitive MOX layer. The target gas is assumed to be ozone. The simplified phenomenological model of the MOX resistance is based on the following formulas:

A reaction - diffusion equation with the parameters reactivity r and diffusion D is supposed to govern the entry of ozone into the gas sensitive MOX layer and leads to an exponentially decreasing ozone concentration profile c(x) of penetration depth x:

$$c(x) = c_0 e^{-\alpha x}, \qquad \alpha^2 = \frac{r}{D}.$$

The total conductivity $\sigma$ of the gas sensitive layer may be derived as a sum of infinitesimal layers:

$$\sigma = \int_0^l \sigma(x) dx = \int_0^l \frac{1}{\rho(c(x))} dx.$$

The resistivity $\rho$ (inverse of conductivity) of a single layer may be modelled as follows (assuming a background of 500ppb hydrogen plus zero air at 50% relative humidity):

$$\rho(c) = R_1 \left(500 - \mu c\right)^{-n_{H2}},$$

*for the perturbation regime;*

$$\rho(c) = R_2 (1 + b\, c)^{\beta r},$$

*for the saturation regime;*

wherein $R_1$ and n are calibration constants (power law fitting constants) of the sensor response to hydrogen. More particularly, $R_1$ is the resistance at 1ppm hydrogen. Furthermore, $\mu$ is a fitting parameter quantifying the selectivity between ozone and hydrogen, and $R_2$, b, and $\beta$ are fitting parameters for the ozone response.

Based on the above formulas, FIG. 8 shows a simulation illustrating resistivity-reactivity curves for three different layer thicknesses. The transition regime between the perturbation regime and the saturation regime was derived by an interpolation. More particularly, FIG. 8 shows the resistance R in dependence on the reactivity r for 5 different concentrations of the target gas ozone in relation to a reference sample of ambient air comprising 0.5ppm $H_2$ and no ozone. The 5 different concentrations are 25ppb ozone, 50ppb ozone, 75ppb ozone, 100 ppb ozone and 200 ppb ozone. The left diagram was simulated for a nominal layer thickness of the gas sensitive layer of 1, e.g. 1 $\mu$m, the middle diagram for a nominal layer thickness of 0.5, e.g. 500 nm and the right diagram for a nominal layer thickness of 0.25, e.g. 250 nm.

As illustrated with the arrow, for a given fixed reactivity of e.g. 2.9, with decreasing layer thickness a characteristic ohmic jump that corresponds to the transition regime having a higher sensor sensitivity occurs at a decreasing ozone concentration. For example, for the layer with the nominal layer thickness 1 the ohmic jump occurs for a concentration between 100 ppb and 200ppb. Hence this curve may be e.g. used for detecting a threshold of 200 ppb. Furthermore, for the layer with the nominal layer thickness 0.5 the ohmic jump occurs for a concentration between 25ppb and 50ppb. Hence this curve may be e.g. used for detecting a threshold of 50 ppb. Finally, for the layer with the nominal layer thickness 0.25 the ohmic jump occurs for a concentration between 0ppb and 25ppb. Hence this curve may be e.g. used for detecting a threshold of 25 ppb.

Hence according to embodiments, for a given reactivity, fixed by MOX material and MOX temperature, MOX layers of different thicknesses are created as different pixels. The layer thickness on each pixel is adapted such that the largest signal amplitude (characteristic ohmic jump) is achieved for the targeted ozone concentration. Each pixel of different thickness may define an ozone threshold concentration. Thus the output of each pixel is binary: above or below the threshold concentration. The combination of pixels (thicknesses) yields concentration bands. The more pixels (thicknesses) are implemented, the narrower the concentration bands.

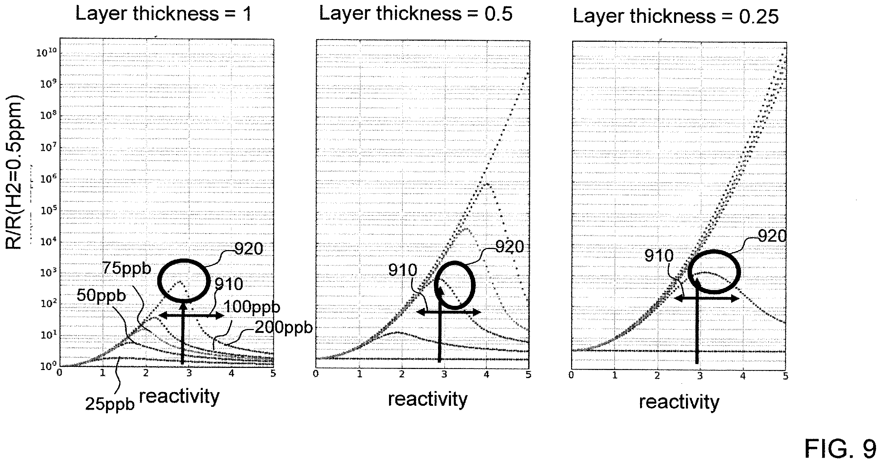

Fig. 9 shows the same diagrams of the simulations according to FIG. 8 with some additional information. More particularly, it shows that according to an embodiment the sensor may be configured to provide a fine-tuning of the transition regime via one or more reactivity control parameters. As indicated by the horizontal arrows 910, for a fixed layer thickness (nominal layer thicknesses 1, 0.5 and 0.25), the response of the sensor towards the target gas (in this example ozone) can be fine-tuned via the temperature of the gas sensitive MOX layers and the material composition of the gas sensitive MOX layers, which both influence/enter the MOX reactivity.

The reactivity tuning can be done such that the dependence of the sensor signal on changes of the reactivity is minimized for the targeted ozone concentration. This may be achieved by selecting a plateau-regions 920 of a respective resistivity-reactivity curve for the respective gas sensitive layer. The plateau regions 920 are indicated by a circle. Since the reactivity of the MOX material can change over time, e.g. through aging, poisoning or other factors, the selection of the plateau regions 920 increases the stability of the sensor signal over time.

Fig. 11 illustrates in a schematic and simplified way a basic mode of operation of a sensor according to another embodiment of the invention.

The sensor comprises a first gas sensitive layer 1111 and a second gas sensitive layer 1121. The second gas sensitive layer 1121 is thicker than the first gas sensitive layer 1111.

Fig. 11 shows both a resistance-concentration curve 1130 for the first gas sensitive layer 1111 and a resistance-concentration curve 1131 for the second gas sensitive layer 1121. The x-axis denotes the concentration of the target gas in a sample of ambient air and the y-axis the resistance of the gas sensitive layers 1111, 1121 in relation to the resistance with no target gas in the sample of ambient air.

According to embodiments, the first gas sensitive layer 1111 and the second gas sensitive layer 1121 may measure the gas concentration in a concentration band 1140 and in a concentration band 1141 in a continuous manner.

A threshold concentration $C_{th1}$ of the resistance-concentration curve 1130 defines the upper limit of the concentration band 1140. The threshold concentration $C_{th1}$ may correspond to the threshold concentration $C_{th1}$ of FIG. 7a. In a concentration band 1140a, which may also be denoted as sub-concentration band 1140a, the sensor shows an increased sensitivity to the target gas and can hence measure the target gas in a continuous/analog way with increased sensitivity.

The threshold concentration $C_{th1}$ also defines the lower limit of the concentration band 1141. The concentration band 1141 comprises a sub-concentration band 1141a. A threshold concentration $C_{th2}$ of the resistance-concentration curve 1131 defines the upper limit of the sub-concentration band 1141a. The threshold concentration $C_{th2}$ may correspond to the threshold concentration $C_{th2}$ of FIG. 7b. In the sub-concentration band 1141a, the sensor shows an increased sensitivity to the target gas and can hence measure the target gas in a continuous/analog way with increased sensitivity.

By increasing the number of layers, a corresponding increase in the number of concentration bands may be achieved.

Accordingly, the concentration bands may be engineered in such a way that adjacent concentration bands are contiguous. This can be used to achieve improved accuracy. In other words, a respective "on-off" configuration of the gas sensitive components defines the actual concentration band, and the lowest "off" gas sensitive components can be used to measure with increased sensitivity, in particular in the sub-concentration bands, e.g. in the sub-concentration bands 1140a and 1141a. The improved accuracy reading may thus be provided by the lowest "off' gas sensitive component, i.e. by the gas sensitive component that is still operated just below its respective threshold concentration, i.e. below

$C_{th1}$ and $C_{th2}$ respectively in the above example.

In a preferred embodiment of the invention, a sensor in accordance with this invention is integrated as a component within stationary or portable electronic devices having further uses other than chemical sensing. The electronic devices may be e.g. car infotainment devices, household appliance devices, smart phones, handheld computers, laptops, electronic readers, tablet computers etc. Its housing is typically a shell of metal, glass, or plastic material and can be assembled as a unibody or from several parts. Enclosed in the housing are typically processors, drivers for parts such as screens, antennae, cameras, microphones and speakers as well as batteries to provide power to the device and its parts. A screen is typically arranged as a part of the housing or mounted behind a transparent window of the housing.

## Claims

1. A sensor for measuring a gas concentration of a target gas in a sample of ambient air, the sensor comprising
a first gas sensitive component (110) comprising a first gas sensitive layer (111) being arranged between a first pair of measuring electrodes (160), the first gas sensitive layer comprising a metal oxide semiconductor;
a second gas sensitive component (120) comprising a second gas sensitive layer (121) being arranged between a second pair of measuring electrodes (161, the second gas sensitive layer comprising a metal oxide semiconductor;
one or more heating elements (135) configured to heat the first gas sensitive layer (111) and the second gas sensitive layer (121);
wherein
the first gas sensitive component (110) is configured to measure the gas concentration of the target gas in a first concentration band; and
the second gas sensitive component (120) is configured to measure the gas concentration of the target gas in a second concentration band, wherein
the first concentration band is different from the second concentration band;
one or more layer parameters of the first gas sensitive layer (111) and the second gas sensitive layer (121) are configured to operate the sensor for both the measuring of the first concentration band and for the measuring of the second concentration band in a respective transition regime, the transition regime being situated between a perturbation regime and a saturation regime, wherein the transition regime is **characterized by** a higher sensitivity to the target gas than the perturbation regime and the saturation regime; and
the first gas sensitive component and the second gas sensitive component differ in at least one of the one or more layer parameters.

2. The sensor of claim 1, wherein the one or more layer parameters are selected from the group consisting of:

a thickness of the first gas sensitive layer (111) and the second gas sensitive layer (121);
the morphology of the first gas sensitive layer (111) and the second gas sensitive layer (121), in particular the porosity of the first gas sensitive layer (111) and the second gas sensitive layer (121);
the material of the first gas sensitive layer (111) and the second gas sensitive layer (121); and
a respective operating temperature of the first gas sensitive layer (111) and the second gas sensitive layer (121).

3. The sensor of claim 1 or claim 2, wherein the sensor is configured the measure the gas concentration in the first concentration band and in the second concentration band in a continuous manner.

4. The sensor of any of the preceding claims, wherein

the first gas sensitive component is configured to detect in the first concentration band a first threshold concentration; and
the second gas sensitive component is configured to detect in the second concentration band a second threshold concentration.

5. The sensor of any of the preceding claims, wherein the first (111) and the second (121) gas sensitive layer comprise an n-doped metal oxide semiconductor material; and
the sensor is configured to measure a concentration of an oxidizing target gas.

6. The sensor of claim 5, wherein the oxidizing target gas is ozone or nitrogen dioxide.

7. The sensor of any of claims 1 to 4, wherein the first (111) and the second (121) gas sensitive layer comprise a p-doped metal oxide semiconductor material; and
the sensor is configured to measure a concentration of a reducing target gas.

8. The sensor of any of the preceding claims, wherein the first gas sensitive component and the second gas sensitive component differ in at least one layer parameter, the layer parameter being selected from the group consisting of:

a thickness of the first gas sensitive layer (111)

and the second gas sensitive layer (121);

the morphology of the first gas sensitive layer (111) and the second gas sensitive layer (121), in particular the porosity of the first gas sensitive layer (111) and the second gas sensitive layer (121);

the material of the first gas sensitive layer (111) and the second gas sensitive layer (121), in particular different additives added to the same base material; and

a respective operating temperature of the first gas sensitive layer (111) and the second gas sensitive layer (121).

9. The sensor of any of the preceding claims, wherein

the first gas sensitive layer (111) has a first thickness and the second gas sensitive layer (121) has a second thickness, the second thickness being different from the first thickness;

the first thickness and the second thickness are chosen such that the sensor operates for both the detection of the first threshold concentration and for the detection of the second threshold concentration in a transition regime, the transition regime being situated between a perturbation regime and a saturation regime, wherein the transition regime is **characterized by** a higher sensitivity to the target gas than the perturbation regime and the saturation regime.

10. The sensor of any of the preceding claims, wherein the sensor comprises a control unit configured to operate in a first operation mode the first gas sensitive component (110) and the second gas sensitive component (120) simultaneously.

11. The sensor of any of the preceding claims, wherein the sensor comprises a control unit configured to operate in second operation mode only the first gas sensitive component (110) or only the second gas sensitive component (120).

12. The sensor of any of the preceding claims, wherein the thickness of the first (111) and the second (121) gas sensitive layer is between 100 nm and 5000 nm.

13. The sensor of any of the preceding claims, wherein the sensor is configured to operate the first and the second gas sensitive component at predefined reactivities.

14. The sensor of claim 1, wherein the sensor is configured to provide a fine-tuning of the transition regime by the operating temperature of the first and the second gas sensitive layer, in particular by selecting a plateau region (920) of a respective resistivity-reactivity curve for the first gas sensitive layer (111) and the second gas sensitive layer (121).

15. A method for measuring a gas concentration of a target gas in a sample of ambient air, the method comprising

providing a first gas sensitive component (110) comprising a first gas sensitive layer (111) being arranged between a first pair of measuring electrodes (160), the first gas sensitive layer comprising a metal oxide semiconductor;

providing a second gas sensitive component (120) comprising a second gas sensitive layer (121) being arranged between a second pair of measuring electrodes (161), the second gas sensitive layer comprising a metal oxide semiconductor;

measuring, by the first gas sensitive component (110), the gas concentration of the target gas in a first concentration band; and

measuring, by the second gas sensitive component (120), the gas concentration of the target gas in a second concentration band, wherein the first concentration band is different from the second concentration band; and

operating both the first gas sensitive layer for the measuring of the first concentration band and the second gas sensitive layer for the measuring of the second concentration band in a respective transition regime, the transition regime being situated between a perturbation regime and a saturation regime, wherein the transition regime is **characterized by** a higher sensitivity to the target gas than the perturbation regime and the saturation regime.

16. A computer program product for operating a sensor as claimed in any of the claims 1-14, the computer program product comprising a computer readable storage medium having program instructions embodied therewith, the program instructions executable by the sensor to cause the sensor to perform a method comprising:

measuring, by the first gas sensitive component (110), the gas concentration of the target gas in a first concentration band; and

measuring, by the second gas sensitive component (120), the gas concentration of the target gas in a second concentration band.

17. An electronic device comprising a sensor as claimed in any of the claims 1-14.

**Patentansprüche**

1. Sensor zum Messen einer Gaskonzentration eines Zielgases in einer Probe der Umgebungsluft, wobei der Sensor umfasst
eine erste gassensitive Komponente (110) mit einer ersten gassensitiven Schicht (111), die zwischen einem ersten Paar von Messelektroden (160) angeordnet ist, wobei die erste gassensitive Schicht einen Metalloxid-Halbleiter umfasst;

eine zweite gassensitive Komponente (120) mit einer zweiten gassensitiven Schicht (121), die zwischen einem zweiten Paar von Messelektroden (161) angeordnet ist, wobei die zweite gassensitive Schicht einen Metalloxid-Halbleiter umfasst;

ein oder mehrere Heizelemente (135), die so konfiguriert sind, dass sie die erste gassensitive Schicht (111) und die zweite gassensitive Schicht (121) erwärmen;

wobei

die erste gassensitive Komponente (110) so konfiguriert ist, dass sie die Gaskonzentration des Zielgases in einem ersten Konzentrationsband misst; und

die zweite gassensitive Komponente (120) so konfiguriert ist, dass sie die Gaskonzentration des Zielgases in einem zweiten Konzentrationsband misst; wobei

sich das erste Konzentrationsband von dem zweiten Konzentrationsband unterscheidet;

ein oder mehrere Schichtparameter der ersten gassensitiven Schicht (111) und der zweiten gassensitiven Schicht (121) konfiguriert sind, um den Sensor sowohl für die Messung des ersten Konzentrationsbandes als auch für die Messung des zweiten Konzentrationsbandes in einem jeweiligen Übergangsbereich zu betreiben, wobei der Übergangsbereich zwischen einem Störungsbereich und einem Sättigungsbereich liegt, wobei der Übergangsbereich durch eine höhere Empfindlichkeit gegenüber dem Zielgas gekennzeichnet ist als der Störungsbereich und der Sättigungsbereich; und

sich die erste gassensitive Komponente und die zweite gassensitive Komponente in mindestens einem der ein oder mehreren Schichtparameter unterscheiden.

2. Sensor nach Anspruch 1, wobei die ein oder mehreren Schichtparameter ausgewählt sind aus der Gruppe bestehend aus:

einer Dicke der ersten gassensitiven Schicht (111) und der zweiten gassensitiven Schicht (121);

der Morphologie der ersten gassensitiven Schicht (111) und der zweiten gassensitiven Schicht (121), insbesondere der Porosität der ersten gassensitiven Schicht (111) und der zweiten gassensitiven Schicht (121);

dem Material der ersten gassensitiven Schicht (111) und der zweiten gassensitiven Schicht (121); und

einer jeweiligen Betriebstemperatur der ersten gassensitiven Schicht (111) und der zweiten gassensitiven Schicht (121).

3. Sensor nach Anspruch 1 oder Anspruch 2, wobei der Sensor so konfiguriert ist, dass er die Gaskonzentration in dem ersten Konzentrationsband und in dem zweiten Konzentrationsband kontinuierlich misst.

4. Sensor nach einem der vorhergehenden Ansprüche, wobei

die erste gassensitive Komponente so konfiguriert ist, dass sie in dem ersten Konzentrationsband eine erste Schwellwert-Konzentration detektiert, und

die zweite gassensitive Komponente so konfiguriert ist, dass sie in dem zweiten Konzentrationsband eine zweite Schwellwert-Konzentration detektiert.

5. Sensor nach einem der vorhergehenden Ansprüche, wobei

die erste (111) und die zweite (121) gassensitive Schicht ein n-dotiertes Metalloxid-Halbleitermaterial enthalten; und

der Sensor so konfiguriert ist, dass er die Konzentration eines oxidierenden Zielgases misst.

6. Sensor nach Anspruch 5, wobei das oxidierende Zielgas Ozon oder Stickstoffdioxid ist.

7. Sensor nach einem der Ansprüche 1 bis 4, wobei die erste (111) und die zweite (121) gassensitive Schicht aus einem p-dotierten Metalloxid-Halbleitermaterial bestehen; und

der Sensor so konfiguriert ist, dass er eine Konzentration eines reduzierenden Zielgases misst.

8. Sensor nach einem der vorhergehenden Ansprüche, wobei sich die erste gassensitive Komponente und die zweite gassensitive Komponente in mindestens einem Schichtparameter unterscheiden, wobei der Schichtparameter ausgewählt ist aus der Gruppe bestehend aus:

einer Dicke der ersten gassensitiven Schicht (111) und der zweiten gassensitiven Schicht (121);

der Morphologie der ersten gassensitiven Schicht (111) und der zweiten gassensitiven Schicht (121), insbesondere der Porosität der ersten gassensitiven Schicht (111) und der zweiten gassensitiven Schicht (121);

dem Material der ersten gassensitiven Schicht (111) und der zweiten gassensitiven Schicht (121), insbesondere unterschiedlichen, dem gleichen Basismaterial zugesetzten Additiven; und

einer jeweiligen Betriebstemperatur der ersten gassensitiven Schicht (111) und der zweiten gassensitiven Schicht (121).

9. Der Sensor nach einem der vorhergehenden Ansprüche, wobei
die erste gassensitive Schicht (111) eine erste Dicke und die zweite gassensitive Schicht (121) eine zweite Dicke aufweist, wobei die zweite Dicke sich von der ersten Dicke unterscheidet;
die erste Dicke und die zweite Dicke so gewählt sind, dass der Sensor sowohl für die Erfassung der ersten Schwellwert-Konzentration als auch für die Erfassung der zweiten Schwellwert-Konzentration in einem Übergangsbereich arbeitet, wobei der Übergangsbereich zwischen einem Störungsbereich und einem Sättigungsbereich liegt, wobei der Übergangsbereich durch eine höhere Empfindlichkeit gegenüber dem Zielgas gekennzeichnet ist als der Störungsbereich und der Sättigungsbereich.

10. Sensor nach einem der vorhergehenden Ansprüche, wobei der Sensor eine Steuereinheit umfasst, die so konfiguriert ist, dass sie in einer ersten Betriebsart die erste gassensitive Komponente (110) und die zweite gassensitive Komponente (120) gleichzeitig betreibt.

11. Der Sensor nach einem der vorhergehenden Ansprüche, wobei der Sensor eine Steuereinheit umfasst, die so konfiguriert ist, dass sie in einer zweiten Betriebsart nur die erste gassensitive Komponente (110) oder nur die zweite gassensitive Komponente (120) betreibt.

12. Der Sensor nach einem der vorhergehenden Ansprüche, wobei die Dicke der ersten (111) und der zweiten (121) gassensitiven Schicht zwischen 100 nm und 5000 nm liegt.

13. Der Sensor nach einem der vorhergehenden Ansprüche, wobei der Sensor so konfiguriert ist, dass er die erste und die zweite gassensitive Komponente bei vordefinierten Reaktivitäten betreibt.

14. Sensor nach Anspruch 1, wobei der Sensor so konfiguriert ist, dass er eine Feinabstimmung des Übergangsbereichs durch die Betriebstemperatur der ersten und der zweiten gassensitiven Schicht vorsieht, insbesondere durch Auswahl eines Plateau-Bereichs (920) einer jeweiligen Widerstands-Reaktivitäts-Kurve für die erste gassensitive Schicht (111) und die zweite gassensitive Schicht (121).

15. Verfahren zum Messen einer Gaskonzentration eines Zielgases in einer Probe der Umgebungsluft, wobei das Verfahren umfasst
Bereitstellen einer ersten gassensitiven Komponente (110), die eine erste gassensitive Schicht (111) umfasst, die zwischen einem ersten Paar Messelektroden (160) angeordnet ist, wobei die erste gassensitive Schicht einen Metalloxid-Halbleiter umfasst;
Bereitstellen einer zweiten gassensitiven Komponente (120) mit einer zweiten gassensitiven Schicht (121), die zwischen einem zweiten Paar von Messelektroden (161) angeordnet ist, wobei die zweite gassensitive Schicht einen Metalloxid-Halbleiter umfasst;
Messen der Gaskonzentration des Zielgases in einem ersten Konzentrationsband durch die erste gassensitive Komponente (110); und
Messen der Gaskonzentration des Zielgases in einem zweiten Konzentrationsband durch die zweite gassensitive Komponente (120), wobei das erste Konzentrationsband von dem zweiten Konzentrationsband verschieden ist; und
Betreiben sowohl der ersten gassensitiven Schicht zur Messung des ersten Konzentrationsbandes als auch der zweiten gassensitiven Schicht zur Messung des zweiten Konzentrationsbandes in einem jeweiligen Übergangsbereich, wobei der Übergangsbereich zwischen einem Störungsbereich und einem Sättigungsbereich liegt, wobei der Übergangsbereich durch eine höhere Empfindlichkeit gegenüber dem Zielgas gekennzeichnet ist als der Störungsbereich und der Sättigungsbereich.

16. Computerprogrammprodukt zum Betreiben eines Sensors nach einem der Ansprüche 1-14, wobei das Computerprogrammprodukt ein computerlesbares Speichermedium mit Programmbefehlen umfasst, wobei die Programmbefehle durch den Sensor ausführbar sind, um den zu Sensor veranlassen, ein Verfahren durchzuführen, das Folgendes umfasst:

Messen der Gaskonzentration des Zielgases in einem ersten Konzentrationsband durch die erste gassensitive Komponente (110); und
Messung der Gaskonzentration des Zielgases in einem zweiten Konzentrationsbereich durch die zweite gassensitive Komponente (120).

17. Elektronische Vorrichtung mit einem Sensor nach einem der Ansprüche 1-14.

**Revendications**

1. Un capteur pour mesurer une concentration de gaz d'un gaz cible dans un échantillon d'air ambiant, le capteur comprenant
un premier composant sensible au gaz (110) comprenant une première couche sensible au gaz (111) étant disposée entre une première paire d'électrodes de mesure (160), la première couche sensible au gaz comprenant un semi-conducteur d'oxyde métallique ;

un deuxième composant sensible au gaz (120) comprenant une deuxième couche sensible au gaz (121) étant disposée entre une deuxième paire d'électrodes de mesure (161), la deuxième couche sensible au gaz comprenant un semi-conducteur d'oxyde métallique ;

un ou plusieurs éléments chauffants (135) configurés pour chauffer la première couche sensible au gaz (111) et la deuxième couche sensible au gaz (121) ;

dans lequel

le premier composant sensible au gaz (110) est configuré pour mesurer la concentration de gaz du gaz cible dans une première bande de concentration ; et

le deuxième composant sensible au gaz (120) est configuré pour mesurer la concentration en gaz du gaz cible dans une deuxième bande de concentration,

la première bande de concentration étant différente de la deuxième;

un ou plusieurs paramètres de couche de la première couche sensible au gaz (111) et de la deuxième couche sensible au gaz (121) étant configurés pour faire fonctionner le capteur à la fois pour la mesure de la première bande de concentration et pour la mesure de la deuxième bande de concentration dans un régime de transition respectif, le régime de transition étant situé entre un régime de perturbation et un régime de saturation, le régime de transition étant **caractérisé par** une sensibilité plus élevée au gaz cible que le régime de perturbation et le régime de saturation; et

le premier composant sensible au gaz et le deuxième composant sensible au gaz diffèrent dans au moins un de l'un ou plusieurs paramètres de la couche.

2. Le capteur selon la revendication 1, dans lequel l'un ou les plusieurs paramètres de couche sont choisis dans le groupe constitué par :

    une épaisseur de la première couche sensible au gaz (111) et de la deuxième couche sensible au gaz (121) ;
    la morphologie de la première couche sensible au gaz (111) et de la deuxième couche sensible au gaz (121), en particulier la porosité de la première couche sensible au gaz (111) et de la deuxième couche sensible au gaz (121) ;
    le matériau de la première couche sensible au gaz (111) et de la deuxième couche sensible au gaz (121) ; et
    une température de fonctionnement respective de la première couche sensible au gaz (111) et de la deuxième couche sensible au gaz (121).

3. Le capteur selon la revendication 1 ou la revendication 2, dans lequel le capteur est configuré pour mesurer la concentration de gaz dans la première bande de concentration et dans la deuxième bande de concentration de manière continue.

4. Le capteur selon l'une quelconque des revendications précédentes, dans lequel
le premier composant sensible au gaz est configuré pour détecter dans la première bande de concentration une première concentration seuil ; et
le deuxième composant sensible au gaz est configuré pour détecter dans la deuxième bande de concentration une deuxième concentration seuil.

5. Le capteur selon l'une quelconque des revendications précédentes, dans lequel
la première (111) et la deuxième (121) couche sensible au gaz comprennent un matériau semi-conducteur d'oxyde métallique dopé n ; et
le capteur est configuré pour mesurer une concentration d'un gaz cible oxydant.

6. Le capteur selon la revendication 5, dans lequel le gaz cible oxydant est l'ozone ou le dioxyde d'azote.

7. Le capteur selon l'une quelconque des revendications 1 à 4, dans lequel
la première (111) et la deuxième (121) couche sensible au gaz comprennent un matériau semi-conducteur d'oxyde métallique dopé p ; et
le capteur est configuré pour mesurer une concentration d'un gaz cible réducteur.

8. Le capteur selon l'une quelconque des revendications précédentes, dans lequel le premier composant sensible au gaz et le deuxième composant sensible au gaz diffèrent par au moins un paramètre de couche, le paramètre de couche étant choisi dans le groupe constitué par :

    une épaisseur de la première couche sensible au gaz (111) et de la deuxième couche sensible au gaz (121) ;
    la morphologie de la première couche sensible au gaz (111) et de la deuxième couche sensible au gaz (121), en particulier la porosité de la première couche sensible au gaz (111) et de la deuxième couche sensible au gaz (121) ;
    le matériau de la première couche sensible au gaz (111) et de la deuxième couche sensible au gaz (121), en particulier différents additifs ajoutés au même matériau de base ; et
    une température de fonctionnement respective de la première couche sensible au gaz (111) et de la deuxième couche sensible au gaz (121).

9. Le capteur de l'une quelconque des revendications précédentes, dans lequel
la première couche sensible au gaz (111) a une première épaisseur et la deuxième couche sensible au gaz (121) a une deuxième épaisseur, la deuxième épaisseur étant différente de la première épaisseur ; la première épaisseur et la deuxième épaisseur sont choisies de telle sorte que le capteur fonctionne à la fois pour la détection de la première concentration de seuil et pour la détection de la deuxième concentration de seuil dans un régime de transition, le régime de transition étant situé entre un régime de perturbation et un régime de saturation, dans lequel le régime de transition est **caractérisé par** une sensibilité plus élevée au gaz cible que le régime de perturbation et le régime de saturation.

10. Le capteur selon l'une quelconque des revendications précédentes, dans lequel le capteur comprend une unité de commande configurée pour faire fonctionner dans un premier mode de fonctionnement le premier composant sensible au gaz (110) et le deuxième composant sensible au gaz (120) simultanément.

11. Le capteur selon l'une quelconque des revendications précédentes, dans lequel le capteur comprend une unité de commande configurée pour faire fonctionner dans un deuxième mode de fonctionnement uniquement le premier composant sensible au gaz (110) ou uniquement le deuxième composant sensible au gaz (120).

12. Le capteur selon l'une quelconque des revendications précédentes, dans lequel l'épaisseur de la première (111) et de la deuxième (121) couche sensible au gaz est comprise entre 100 nm et 5000 nm.

13. Le capteur de l'une quelconque des revendications précédentes, dans lequel le capteur est configuré pour faire fonctionner le premier et le deuxième composant sensible au gaz à des réactivités prédéfinies.

14. Le capteur selon la revendication 1, dans lequel le capteur est configuré pour fournir un réglage fin du régime de transition par la température de fonctionnement de la première et de la deuxième couche sensible au gaz, en particulier en sélectionnant une région de plateau (920) d'une courbe résistivité-réactivité respective pour la première couche sensible au gaz (111) et la deuxième couche sensible au gaz (121).

15. Un procédé pour mesurer une concentration de gaz d'un gaz cible dans un échantillon d'air ambiant, le procédé comprenant
fournir un premier composant sensible au gaz (110) comprenant une première couche sensible au gaz (111) étant disposée entre une première paire d'électrodes de mesure (160), la première couche sensible au gaz comprenant un semi-conducteur d'oxyde métallique ;
fournir un deuxième composant sensible au gaz (120) comprenant une deuxième couche sensible au gaz (121) qui est agencée entre une deuxième paire d'électrodes de mesure (161), la deuxième couche sensible au gaz comprenant un semi-conducteur d'oxyde métallique ;
mesurer, par le premier composant sensible au gaz (110), la concentration en gaz du gaz cible dans une première bande de concentration ; et
mesurer, par le deuxième composant sensible au gaz (120), la concentration en gaz du gaz cible dans une deuxième bande de concentration, dans laquelle la première bande de concentration est différente de la deuxième bande de concentration ; et
faire fonctionner à la fois la première couche sensible au gaz pour la mesure de la première bande de concentration et la deuxième couche sensible au gaz pour la mesure de la deuxième bande de concentration dans un régime de transition respectif, le régime de transition étant situé entre un régime de perturbation et un régime de saturation, dans lequel le régime de transition est **caractérisé par** une sensibilité plus élevée au gaz cible que le régime de perturbation et le régime de saturation.

16. Un produit de programme informatique pour faire fonctionner un capteur selon l'une quelconque des revendications 1 à 14, le produit de programme informatique comprenant un élément de stockage lisible par ordinateur ayant des instructions de programme incorporées dans celui-ci, les instructions de programme étant exécutables par le capteur pour amener le capteur à réaliser un procédé comprenant :

mesurer, par le premier composant sensible au gaz (110), la concentration en gaz du gaz cible dans une première bande de concentration ; et
mesurer, par le deuxième composant sensible au gaz (120), la concentration du gaz cible dans une deuxième bande de concentration.

17. Un dispositif électronique comprenant un capteur tel que revendiqué dans l'une quelconque des revendications 1 à 14.

FIG. 1A

FIG. 1B

FIG. 1C

111, 121

210

166

162, 163

160, 161

130

162, 163

135

**200**

FIG. 2a

111, 121

210

160, 161

160, 161

130

162, 163

135

**200**

FIG. 2b

111, 121

210

160, 161

160, 161

130

162, 163

135

**200**

FIG. 2c

FIG. 3

FIG. 4

FIG. 5

EP 3 382 380 B1

**FIG. 6**

600

C < 25 ppb     25<C<50ppb     50<C<75ppb     C > 75 ppb

$px_3$, $th_3$, $T_3$, MOX3    630

$px_2$, $th_2$, $T_2$, MOX2    620

$px_1$, $th_1$, $T_1$, MOX1    610

pixel/component shows signal

FIG. 7a

FIG. 7b

FIG. 8

FIG. 9

FIG. 10

FIG. 11

**EP 3 382 380 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040026268 A
- EP 2051067 A1
- DE 4424342 C1